# EUROPEAN PATENT APPLICATION

(11) **EP 4 826 001 A1**
(43) Date of publication of application: **21.10.2026**
(21) Application number: 24904041.1
(22) Date of filing: 21.11.2024
(51) Int. Cl.: C22B 26/12, C22B 3/42, C22B 3/02, G06N 5/04, G06Q 50/04

(54) **LITHIUM PRODUCTION METHOD AND DEVICE**

(30) Priority: 12.12.2023 KR 20230179450
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: LEE, Sihwa, Seoul 07542 (KR); KIM, Kyunghoon, Pohang-si, Gyeongsangbuk-do 37645 (KR); KIM, Dong Soo, Pohang-si, Gyeongsangbuk-do 37671 (KR); SEO, Bae Mun, Pohang-si, Gyeongsangbuk-do 37638 (KR); WI, Jin Yeop, Pohang-si, Gyeongsangbuk-do 37669 (KR)
(74) Representative: Pfenning, Meinig & Partner mbB
(86) International application number: PCT/KR2024/018444
(87) International publication number: WO 2025/127475

(57) **Abstract**

A lithium production method according to an embodiment includes: calculating a key variable determining production yield of a production tank in electrodialysis equipment through an AI model, setting a range of input conditions for the calculated key variable, and inputting an input condition within the range into an AI model to calculate production yield and production results corresponding to the input condition, and determining a final operating condition from the production yield and the production results when the calculated production yield and production results satisfy specific conditions.

## Description

### [TECHNICAL FIELD]

The present invention relates to a method and device for producing lithium, and more particularly, to a method and device for producing lithium that determines operating conditions for an optimal production yield and production indicators.

### [BACKGROUND ART]

BPED (BiPolar ElectroDialysis) is one of the electro-separation processes and is used to separate or concentrate specific ions from a solution using ion exchange materials. The BPED is particularly attracting attention as an important water separation and regeneration technology. However, the efficiency and performance of the BPED operations may vary significantly depending on various operating conditions. Therefore, finding optimal operating conditions may significantly improve the economic feasibility and efficiency of the process.

### [DISCLOSURE OF INVENTION]

### [TECHNICAL PROBLEM]

An embodiment of the present invention provides a method and device for producing lithium that respectively determines optimal operating conditions for key variables calculated by applying a boosting-based AI model in a preprocessing process.

An embodiment of the present invention provides a method and device for producing lithium that generates optimal operating conditions satisfying optimal production yield and production results for key variables calculated through AI-based preprocessing.

### [TECHNICAL SOLUTION]

Among embodiments, a lithium production method includes: calculating a key variable determining production yield of a production tank in electrodialysis equipment through an artificial intelligence AI model; setting a range of input conditions for the calculated key variable; and calculating production yield and production results corresponding to the input condition by inputting the input condition within the range into the AI model and determining a final operating condition from the production yield and the production results when the calculated production yield and production results satisfy a specific condition.

The determining of the final operating condition may include: a first step of generating a randomly selected input condition within the set range; a second step of calculating production yield and production results corresponding to the input condition by inputting the generated input condition into a boosting-based AI model; a third step of determining the production yield and the input condition as candidate operating conditions when the production results satisfy preset constraints; and a step of determining one candidate operating condition, which outputs production yield and production results closest to preset objective conditions among a plurality of candidate operating conditions determined by repeating the first step to the third step, as the final operating condition.

The calculating of the key variable may include: a cleaning step of obtaining a plurality of first variables through data cleaning for a plurality of initial variables used in the electrodialysis equipment; a first preprocessing step of calculating variable importance for each of the first variables by inputting the first variables into the boosting-based AI model and obtaining a plurality of second variables through preprocessing based on the variable importance; and a second preprocessing step of obtaining a plurality of key variables that satisfies a prediction accuracy greater than a first threshold with a minimum number by inputting the second variables into the boosting-based AI model.

In the method, permutation importance may be used for the variable importance; and the first preprocessing step may include removing first variables among the first variables whose permutation importance is less than a preset second threshold.

The second preprocessing step may include calculating the prediction accuracy through Mean Absolute Percentage Error MAPE.

The setting of the range of the input conditions may include determining the range of the input conditions based on an upper limit and a lower limit of input conditions within a total operating period using the electrodialysis equipment.

The production tank may include a base tank and an acid tank, and the production yield may include production yield of lithium (Li) and production yield of sulfur (S) in the base tank, and production yield of sulfur and production yield of lithium in the acid tank.

The key variables may include a first key variable determining the production yield of lithium (Li) in the base tank, a second key variable determining the production yield of sulfur (S) in the base tank, a third key variable determining the production yield of sulfur in the acid tank, and a fourth key variable determining the production yield of lithium in the acid tank.

The production results may include a plurality of production indicators; and the plurality of production indicators include a sulfur (S) concentration in the base tank, a lithium concentration in the acid tank, current efficiency, and a lithium conversion rate.

The second step may include: calculating production yields for each of the first to fourth key variables by respectively inputting first to fourth input conditions randomly selected in correspondence with each of the first to fourth key variables; and calculating the production results by combining the calculated production yields for each.

Among embodiments, a lithium production device includes: a key variable calculation module for calculating a key variable determining production yield of a production tank in electrodialysis equipment through an artificial intelligence AI model; an operating condition generation module for setting a range of input conditions for the calculated key variable and calculating production yield and production results corresponding to the input condition as operating conditions by inputting an input condition selected within the range into the AI model; and an operating condition optimization module for determining the calculated operating condition as a final operating condition when the calculated operating condition satisfies a specific condition.

The operating condition generation module may determine the production yield and the input condition as a candidate operating condition when the production results satisfies preset constraints; and the operating condition optimization module may determine one candidate operating condition, which outputs production yield and production results closest to preset objective conditions among a plurality of candidate operating conditions generated through the operating condition generation module, as the final operating condition.

The key variable calculation module may include: a cleaning unit for obtaining a plurality of first variables through data cleaning for a plurality of initial variables used in the electrodialysis equipment producing lithium; a first preprocessing unit for calculating variable importance for each of the first variables by inputting the first variables into a boosting-based AI model and for obtaining a plurality of second variables through preprocessing based on the variable importance; and a second preprocessing unit for obtaining a plurality of key variables satisfying a prediction accuracy greater than a first threshold with a minimum number by inputting the second variables into the boosting-based AI model.

In the device, permutation importance may be used for the variable importance; and the first preprocessing unit may remove first variables among the first variables whose the permutation importance is less than a preset second threshold.

The second preprocessing unit may calculate the prediction accuracy through Mean Absolute Percentage Error MAPE.

The operating condition generation module may determine the range of the input conditions based on an upper limit and a lower limit of the input conditions within a total operating period using the electrodialysis equipment.

The production tank may include a base tank and an acid tank, and the production yield may include production yield of lithium (Li), production yield of sulfur (S) in the base tank, and production yield of sulfur and production yield of lithium in the acid tank.

The key variable may include a first key variable determining the production yield of lithium (Li) in the base tank, a second key variable determining the production yield of sulfur (S) in the base tank, a third key variable determining the production yield of sulfur in the acid tank, and a fourth key variable determining the production yield of lithium in the acid tank.

The production results may include a plurality of production indicators; and the plurality of production indicators may include a sulfur (S) concentration in the base tank, a lithium concentration in the acid tank, current efficiency, and a lithium conversion rate.

The operating condition generation module may calculate production yield for each of the first to fourth key variables by respectively inputting first to fourth input conditions randomly selected in correspondence with each of the first to fourth key variables; and calculate the production results by combining the calculated production yields for each of the first to fourth key variables.

### [ADVANTAGEOUS EFFECTS]

A method and device for producing lithium according to an embodiment of the present invention may respectively determine optimal operating conditions for key variables calculated by applying a boosting-based AI model in a preprocessing process.

A method and device for producing lithium according to an embodiment of the present invention may generate optimal operating conditions satisfying optimal production yield and production results for key variables calculated through AI-based preprocessing.

### [BRIEF DESCRIPTION OF DRAWINGS]

FIG. 1 is a diagram illustrating the configuration of electrodialysis equipment according to an embodiment of the present invention.
FIG. 2 is a diagram illustrating one stage of electrodialysis equipment according to an embodiment of the present invention.
FIG. 3 is a block diagram illustrating a lithium production device according to an embodiment of the present invention.
FIG. 4 is a flowchart of a step of calculating key variables according to an embodiment of the present invention.
FIG. 5 and FIG. 6 are flowcharts of a lithium production method according to an embodiment of the present invention.
FIG. 7 to FIG. 10 are graphs illustrating results of calculating production yields for key variables according to an embodiment of the present invention.
FIG. 11 shows optimal operating conditions generated according to a lithium production method according to an embodiment of the present invention.
FIG. 12 is a diagram illustrating a computing device according to an embodiment of the present invention.

### [MODE FOR CARRYING OUT THE INVENTION]

Hereinafter, embodiments of the present invention will be described in detail with reference to the accompanying drawings so that those of ordinary skill in the art to which the present invention pertains may easily implement them. However, the present invention may be implemented in various different forms and is not limited to the embodiments described herein. In the drawings, parts irrelevant to the description are omitted to clearly describe the present invention, and similar reference numerals are attached to similar parts throughout the specification.

Throughout the specification and claims, when a part "includes" or "comprises" a certain component, this means that it may further include other components rather than excluding other components unless otherwise stated. Terms including ordinal numbers, such as first and second, may be used to describe various components, but the components are not limited by the terms. The terms are used only for the purpose of distinguishing one component from another component.

Terms such as "...unit", "...device", and "module" described in the specification may mean a unit capable of processing at least one function or operation, which may be implemented by hardware or a circuit, software, or a combination of hardware or a circuit and software.

Hereinafter, embodiments of the present invention will be described with reference to the drawings.

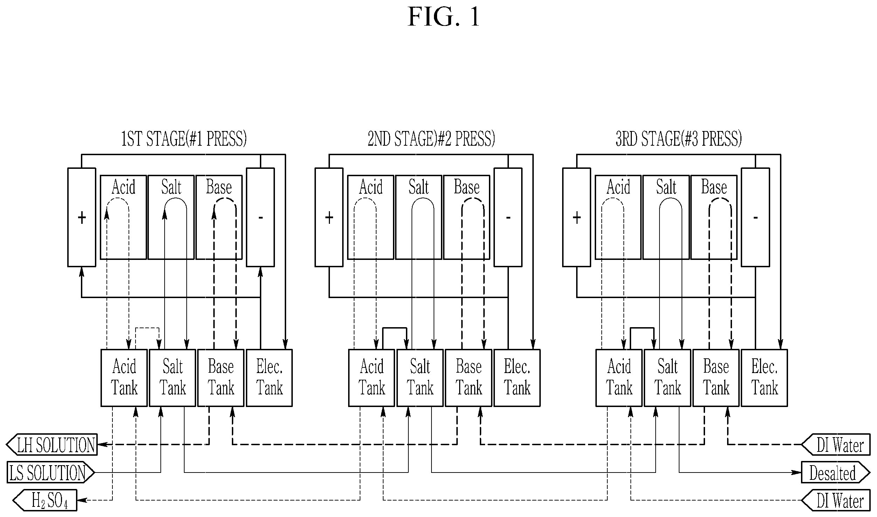

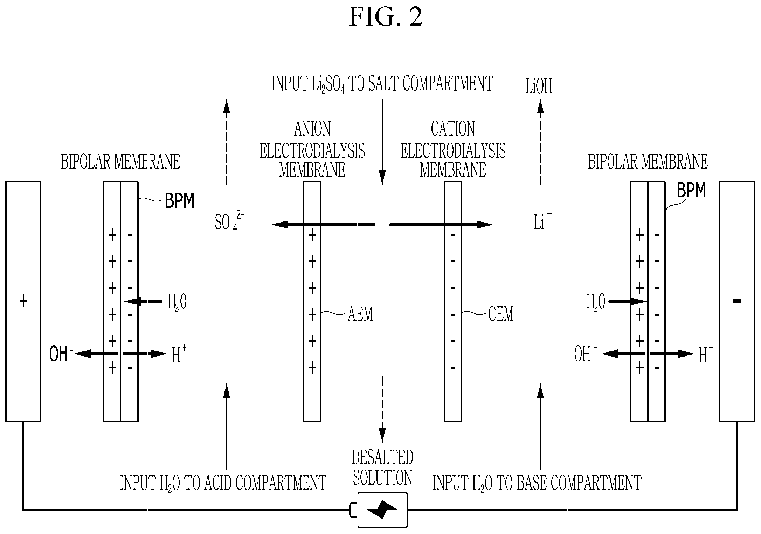

FIG. 1 is a diagram illustrating a configuration of electrodialysis equipment according to an embodiment of the present invention. FIG. 2 is a diagram illustrating one stage of electrodialysis equipment according to an embodiment of the present invention.

In FIG. 1 and FIG. 2, the electrodialysis equipment may be a BiPolar ElectroDialysis BPED equipment. That is, the electrodialysis equipment may be bipolar structure electrodialysis equipment. The electrodialysis (BPED) equipment may be equipment for converting lithium sulfate aqueous solution into lithium hydroxide and sulfuric acid. Here, lithium sulfate is Li₂SO₄, lithium hydroxide is LiOH, and sulfuric acid is H₂SO₄. The electrodialysis (BPED) equipment may be an aqueous solution processing equipment that simultaneously performs water splitting and ion separation using an electrodialysis membrane within an electric field.

Referring to FIG. 1 and FIG. 2, the electrodialysis (BPED) equipment may include a cation exchange membrane CEM, an anion exchange membrane AEM, and a bipolar membrane BPM.

The cation exchange membrane CEM has an internal anionic group and may pass only cations (e.g., Li⁺). The anion exchange membrane AEM may pass only anions (e.g., SO₄²⁻) by internal cationic groups. The bipolar membrane BPM, a cation membrane and an anion membrane overlapped with a water splitting catalyst interposed therebetween. The bipolar membrane BPM may split water within the electric field to generate hydrogen ions (H⁺) and hydroxide ions (OH⁻).

That is, the electrodialysis (BPED) equipment may be an aqueous solution treatment equipment that simultaneously performs water splitting (splitting into H⁺, OH⁻) and ion separation (ion separation of Li⁺, SO₄²⁻) using electrodialysis membranes (the cation exchange membrane, the anion exchange membrane, and the bipolar membrane) within the electric field.

In FIG. 1, in the electrodialysis (BPED) equipment, through a three-stage process (Press) including a first stage to a third stage, LS solution may deliver Li and SO₄ ions to LH solution and sulfuric acid (H₂SO₄) solution. For example, in the electrodialysis (BPED) equipment, deionized DI water may be converted into the LH solution and the sulfuric acid solution while contacting the LS solution in a counter flow. Here, the LS solution is lithium sulfate (Li₂SO₄), and the LH solution is lithium hydroxide (LiOH).

The first to third stages may include a salt compartment, an acid compartment, a base compartment, a salt tank, an acid tank, and a base tank, respectively.

In each stage, the salt compartment may supply lithium sulfate (Li₂SO₄) to produce desalted water after reaction. The acid compartment may supply deionized DI water to produce sulfuric acid (H₂SO₄) after reaction. The base compartment may supply deionized DI water to produce lithium hydroxide (LiOH) after reaction.

The salt tank stores the produced desalted water. The acid tank stores the produced sulfuric acid. The base tank stores the produced lithium hydroxide.

The production yield of the electrodialysis (BPED) equipment is determined according to the output flow rates of the sulfuric acid and lithium hydroxide. The production yield may be determined according to management of an input flow rate of water (H2O) and an input flow rate of lithium sulfate into the electrodialysis (BPED) equipment, control of current and voltage of the rectifier, and management of PH, conductivity, circulation flow rate, and circulation pressure in each compartment. The input flow rate of the solution, the current and voltage of the rectifier, PH, conductivity, circulation flow rate, and circulation pressure, which correspond to control elements and management elements, may be detected through internal sensors installed in each compartment. The control elements and management elements may correspond to variables determining the concentration of produced lithium hydroxide and sulfuric acid.

As production results for determining optimal operating conditions of the electrodialysis (BPED) equipment, production indicators may include lithium production yield (kg/hr), current efficiency (%), sulfur (S) concentration ratio in the base solution, lithium (Li) concentration ratio in the acid solution, and lithium (Li) conversion rate (%).

The lithium concentration in the base solution in the base tank, the sulfur concentration in the base solution in the base tank, the sulfur concentration in the acid solution in the acid tank, and the lithium concentration in the acid solution in the acid tank of the electrodialysis (BPED) equipment may be components for calculating the production indicators.

That is, a first key variable for the lithium concentration in the base solution (LiOH) in the base tank, a second key variable for the sulfur concentration in the base solution in the base tank, a third key variable for the sulfur concentration in the acid solution (H₂SO₄) in the acid tank, and a fourth key variable for the lithium concentration in the acid solution in the acid tank of the electrodialysis (BPED) equipment may be key variables determining the production indicators. The first to fourth key variables may each be calculated through a boosting-based AI model.

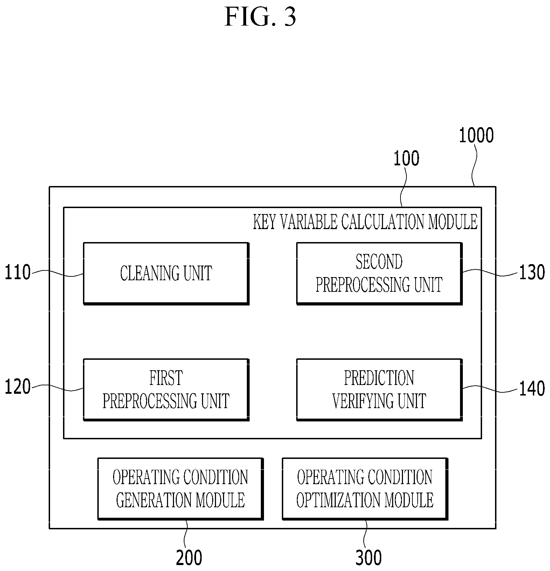

FIG. 3 is a block diagram illustrating a lithium production device according to an embodiment of the present invention.

The lithium production device 1000 generates optimal operating conditions achieving an objective function (objective conditions) for the production indicators including lithium production yield (kg/hr), current efficiency (%), S concentration ratio in base, Li concentration ratio in acid, and Li conversion rate (%).

The lithium production device 1000 may generate the optimal operating conditions through the first to fourth key variables. Since the key variables are used as components consisting of the production indicators representing the optimal operating conditions, the key variables are calculated through an AI model with high accuracy. The lithium production device 1000 may generate a prediction model for each of the first to fourth key variables as a partial model.

The lithium production device 1000 includes a key variable calculation module 100, an operating condition generation module 200, and an operating condition optimization module 300.

The key variable calculation module 100 may calculate key variables through the boosting-based AI model. More specifically, the key variable calculation module 100 may calculate the key variables through the boosting-based AI model including partial models respectively calculating the first to fourth key variables. The key variable calculation module 100 includes a cleaning unit 110, a first preprocessing unit 120, a second preprocessing unit 130, and a prediction verifying unit 140.

The cleaning unit 110 may obtain a plurality of first variables through preprocessing for a plurality of initial variables used in the electrodialysis (BPED) equipment. For example, the number of initial variables may be 525. The cleaning unit 110 may remove missing values, outliers, redundant data, non-operating date data (non-operating sensor data), and data for processes other than the BPED process through preprocessing of data cleaning from the initial variables including all variables of the BPED process. The cleaning unit 110 may also remove data moving identically according to correlation analysis by data as the redundant data. The cleaning unit 110 may obtain the first variables whose number is reduced compared to the initial variables through the data cleaning. For example, the number of first variables may be 400.

The first preprocessing unit 120 may calculate variable importance for each of the first variables by inputting the first variables into the boosting-based AI model.

The boosting-based AI model may be an AI model using a boosting algorithm. Boosting is a type of machine learning algorithm that combines weak learners to create a strong learner. Boosting methods may be used for classification problems and regression problems. A boosting algorithm trains models sequentially. At each step, the boosting algorithm adds a new model that corrects the errors of previous models. The boosting algorithm combines all models to generate a final prediction.

The boosting-based AI model may be selected from the group consisting of AdaBoost, Random forest, Catboost, Gradient Boosting Model, Light GBM, and XGBoost. The boosting-based AI model may preferably be the XGBoost.

The AdaBoost (Adaptive Boosting) is one of early stage boosting algorithms, which assigns weights to each data point and trains while giving more weight to misclassified data points.

The Gradient Boosting Machines GBM is a method of training a model in a direction of reducing errors. The errors at each step are calculated using a gradient of a loss function.

The XGBoost (Extreme Gradient Boosting) is an extended version of the GBM and includes functions such as regularization, parallel processing, and missing value processing.

The Light GBM is a boosting algorithm specialized for large-scale datasets, and is characterized by fast learning speed and efficient memory use. Like the XGBoost, the Light GBM includes functions of the regularization and parallel processing.

The CatBoost is a boosting algorithm specialized for categorical data, providing automatic categorical feature transformation and fast learning speed.

In the regression problem such as production concentration prediction, the boosting-based AI model prepares data through preprocessing, trains the model, evaluates performance, and analyzes the importance of features. When a satisfactory model is obtained through this, the boosting-based AI model predicts the concentration in real-time by applying to an actual environment and is used for production control and optimization.

In this process, the boosting-based AI model may analyze the importance of features or variables and identify which variable has the greatest influence on the production concentration prediction.

That is, the first preprocessing unit 120 may analyze the variable importance for the first variables through the boosting-based AI model and identify which variables have a greater influence on the prediction of production yield including lithium and sulfur production concentrations.

The first preprocessing unit 120 may use permutation importance to identify the variable importance. The permutation importance is a methodology for estimating feature importance by checking how much the value of model performance metrics (accuracy, F1-score, R^2, etc.) decreases when a certain feature is excluded from the AI model.

The first preprocessing unit 120 may obtain a plurality of second variables through the first preprocessing based on the calculated variable importance. For example, the first preprocessing unit 120 may remove a first variable among the first variables whose permutation importance is less than a preset specific threshold. That is, the first preprocessing unit 120 may assume that the influence on the performance of the AI model is lower as the importance of the variable is lower according to the permutation importance of each of the first variables, and may improve the prediction performance of production yield of the AI model by reducing noise in the data by removing variables having importance lower than a specific threshold. The second variables may include variables remaining after removing of the variables whose permutation importance is less than the specific threshold among the first variables. For example, the number of second variables may be 100.

The second preprocessing unit 130 may input the second variables into the boosting-based AI model to obtain a plurality of third variables that satisfy a prediction accuracy greater than or equal to a first threshold with a minimum number. For example, the number of third variables may be determined to be 4, 10, 33, 100, etc., which are different for each partial model.

The boosting-based AI model creates a model with the preprocessed data and evaluates performance to improve the prediction performance of the model. In an embodiment, the second preprocessing unit 130 evaluates the performance of the model with the second variables and obtains a third variable having a prediction accuracy greater than a specific threshold as a result of the evaluation. For example, the second preprocessing unit 130 may use evaluation indicators such as MAE, RMSE, and MAPE.

MAE (Mean Absolute Error) is the average of absolute values of each prediction error. RMSE (Root Mean Square Error) is the square root of the average of squares of each prediction error. MAPE (Mean Absolute Percentage Error) is the average of the absolute percentage error, which is a value obtained by dividing the absolute value of each prediction error by the actual value and then taking the average of the whole. That is, it is the percentage ratio of the value obtained by dividing the difference between the actual value and the predicted value by the actual value. The result may be expressed as a percentage. The Mean Absolute Percentage Error (MAPE) is a tool for evaluating prediction accuracy, which is frequently used in regression problems/models and allows intuitive interpretation of prediction results because it represents a relative error ratio.

The second preprocessing unit 130 may calculate prediction accuracy of the AI model using the second variables by using the Mean Absolute Percentage Error MAPE, and obtain the third variables included in a set consisting of the minimum number of variables among sets of a plurality of variables whose calculated prediction accuracy satisfies a preset specific threshold. The third variables may be key variables. The key variables may be determined for each partial model. The key variables may be the first to fourth key variables.

The prediction verifying unit 140 may calculate the variable importance for each of the obtained third variables. The prediction verifying unit 140 may compare the prediction accuracy when only one variable having the highest variable importance among the third variables is input to the boosting-based AI model with the prediction accuracy when all of the third variables are input. The prediction verifying unit 140 may determine the third variable as the final variable when the prediction accuracy of the case when all of the third variables are input is greater than the prediction accuracy of the case when one variable having the highest variable importance is input.

The third variables may be any one of conductivity, input flow rate, circulation flow rate, and circulation pressure for any one of lithium sulfate aqueous solution, sulfuric acid, and lithium hydroxide.

The operating condition generation module 200 may set a range of input conditions for the key variable.

The operating condition generation module 200 may determine the range of the input conditions based on an upper limit and a lower limit of the input conditions within a total operating period using the electrodialysis equipment. The operating condition generation module 200 checks the lower limit and upper limit of the input conditions for each of the variables during the total operating period. Table 1 shows the lower limit and upper limit of each of the input conditions for some of 100 variables.

**[Table 1]**

| No. | Tag name | Lower limit | Upper limit |
|---|---|---|---|
| 1 | 1^{st} flow rate value | 6.6 | 16.8 |
| 2 | 2^{nd} flow rate value | 9.7 | 16 |
| 3 | 3^{rd} flow rate value | 4.8 | 14.1 |
| 4 | 4^{th} flow rate value | 0 | 4.6 |
| 5 | 5^{th} flow rate value | 0 | 7 |
| ... | ... | ... | ... |
| 25 | 1^{st} temperature value | 25 | 37 |
| 26 | 2^{nd} temperature value | 25 | 45 |
| 27 | 3^{rd} temperature value | 25 | 38 |
| 28 | 4^{th} temperature value | 9 | 47 |
| 29 | 5^{th} temperature value | 25 | 40 |
| 30 | 6^{th} temperature value | 25 | 46.5 |
| ... | ... | ... | ... |
| 99 | 1^{st} conductivity value | 0 | 339 |
| 100 | 3^{rd} conductivity value | 35 | 339 |

For example, the first to fifth flow rate values of variable numbers 1 to 5 show the lower limit and upper limit of the flow rate values detected (Tag) in the first to fifth sensors, respectively. The first temperature value of number 25 shows that the lower limit of the temperature (TT) detected (Tag) in the first temperature sensor within the total operating period is 25 degrees and the upper limit is 37 degrees. The third conductivity value of number 100 shows that the lower limit of the conductivity (CT) detected in the third current-voltage sensor is 35 and the upper limit is 339. The operating condition generation module 200 may set a range from the lower limit to the upper limit of the input conditions for each of the checked variables as the range of the input conditions for each of the variables. The operating condition generation module 200 may randomly select an input condition within the set range. For example, the operating condition generation module 200 may set a temperature input condition for the variable first temperature value to 30 degrees randomly selected from 25 degrees to 37 degrees. At the same time, the input condition of conductivity for the variable third conductivity value may be set to 250 randomly selected from the range of 35 to 339. The operating condition generation module 200 may generate a plurality of input conditions by repeating randomly selecting input conditions.

The operating condition generation module 200 may calculate a corresponding production yield and production results by inputting the selected input condition into the boosting-based AI model.

For example, the operating condition generation module 200 may input a first input condition randomly selected as described above into each of the first key variables calculated in a partial model for the lithium concentration (first key variable) in the base solution in the base tank, and calculate the lithium concentration corresponding to the input condition. The operating condition generation module 200 may also input second to third input conditions randomly selected for the second to third key variables, respectively, and calculate the concentration of sulfur or lithium as the production yield.

The operating condition generation module 200 may combine the calculated production yields for each of the first to fourth key variables to calculate the production results. The production results may be expressed as the production indicators including lithium production yield (kg/hr), current efficiency (%), S concentration ratio in base, Li concentration ratio in acid, and Li conversion rate (%) as described above.

The operating condition generation module 200 may generate a corresponding production yield and the first to fourth input conditions as the candidate operating conditions when the production results satisfy preset constraints. The operating condition generation module 200 may generate a plurality of candidate operating conditions. That is, the operating condition generation module 200 may repeatedly generate randomly selected input conditions within the range of input conditions for the key variables, and generate the plurality of candidate operating conditions based on repeatedly generated input conditions. The operating condition generation module 200 may repeat the generation of candidate operating conditions for a preset number of times (m).

The operating condition optimization module 300 may determine one candidate operating condition, which outputs production yield and production results closest to preset objective conditions among the plurality of candidate operating conditions generated through the operating condition generation module 200, as the final operating condition.

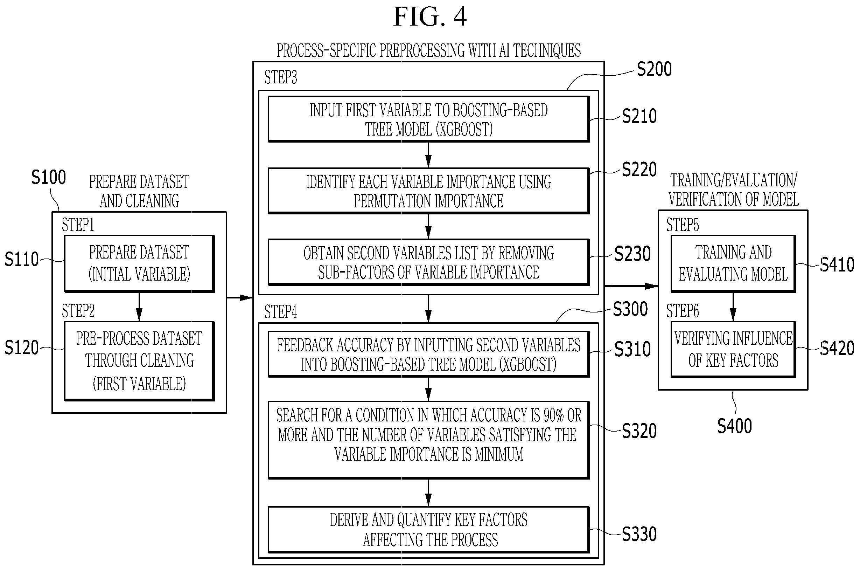

FIG. 4 is a flowchart illustrating a step of calculating of key variables according to an embodiment of the present invention. The calculating of key variables may be performed through the key variable calculation module 100 (see FIG. 3). The key variable calculation module 100 (see FIG. 3) may calculate a plurality of key variables through the calculating of key variables.

The calculating of key variables includes a cleaning step (step S100), a first preprocessing step (step S200), a second preprocessing step (step S300), and a verification step (step S400).

In FIG. 4, first, the cleaning step (step S100) may include a cleaning step of preparing and cleaning a dataset of BPED operation data (step S110). The cleaning step (step S100) cleans initial variables to obtain first variables (step S120). Data cleaning may include removing missing values, outliers, redundant data, non-operating date data (non-operating sensor data), and data for processes other than the BPED process.

Thereafter, the first preprocessing step (step S200) may preprocess the first variables using the XGBoost, which is the boosting-based AI model. The first preprocessing step (step S200) may input the first variables into the XGBoost (step S210). The first preprocessing step (step S200) identifies the variable importance of each of the first variables using the permutation importance (step S220). The first preprocessing step (step S200) removes sub-factors of the permutation importance to obtain the second variables (step S230).

Thereafter, the second preprocessing step (step S300) inputs the second variables into the XGBoost to obtain feedback on the performance through the accuracy (step S310). The second preprocessing step (step S300) searches for a condition in which a specific threshold of accuracy (e.g., 90% or 95%) or higher is met through an accuracy identification factor such as the MAPE and the number of variables satisfying variable importance (e.g., permutation importance) is minimum (step S320). The second preprocessing step (step S300) derives and quantifies major factors satisfying the above conditions as minimum variables (key variables) influencing the process (step S330).

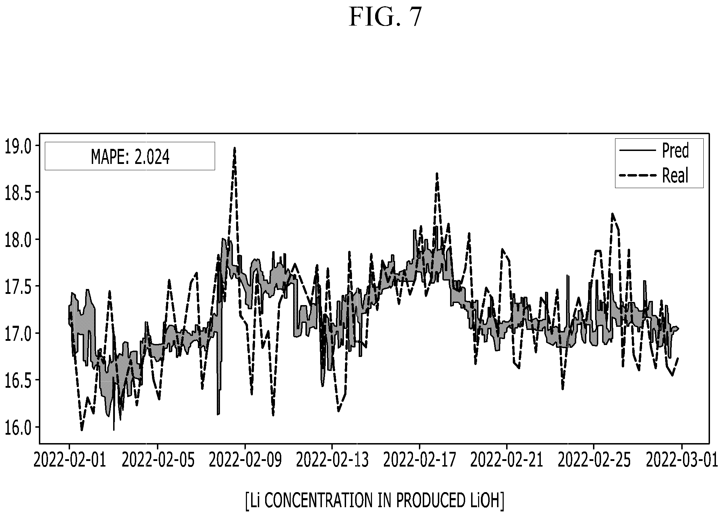

Thereafter, the verification step (step S400) trains and evaluates the AI model using the derived key variables (step S410). The training and evaluation step (step S400) may verify the influence of the key variables according to the prediction accuracy of evaluation results (step S420). The influence of the key variables may be verified through the graphs of FIG. 7 to FIG. 10.

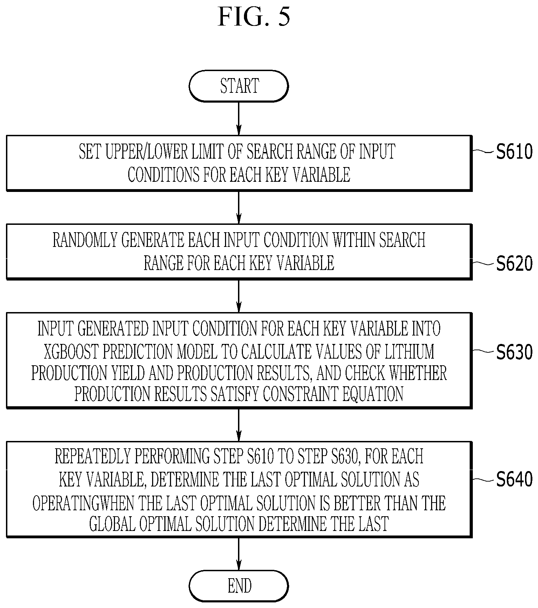

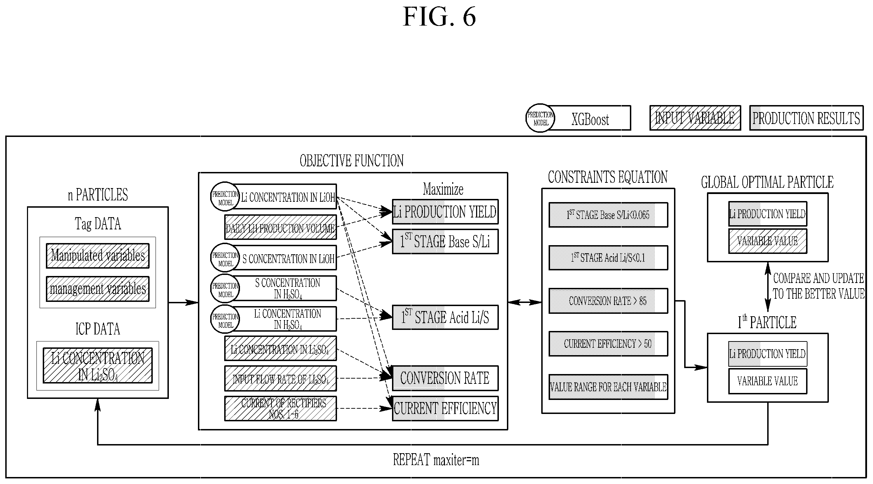

FIG. 5 and FIG. 6 are flowcharts illustrating a lithium production method according to an embodiment of the present invention. The lithium production method may be performed through the lithium production device 1000 (see FIG. 3).

The lithium production device 1000 may set an upper/lower limit of a search range of input conditions for each key variable for the key variables calculated through the steps of FIG. 4 (step S610). The upper/lower limit of the search range may be set based on tag data measured during the total operating period.

The lithium production device 1000 may randomly generate each input condition within the search range for each of the key variables (step S620). For example, the lithium production device 1000 respectively generates the input conditions for each of the key variables for a plurality of partial models (e.g., four prediction models (see FIG. 6)) randomly.

The lithium production device 1000 may input the generated input condition for each of the key variables into the XGBoost prediction model to calculate values of lithium production yield and production results, and check whether the production results satisfy a constraint equation (step S630). The lithium production device 1000 may determine the input conditions and the lithium production yield when the constraint equation is satisfied as the candidate operating conditions.

After repeatedly performing the above steps (step S610 to step S630), for each of the key variables, the lithium production device 1000 may replace a global optimal solution when the last optimal solution is better than the global optimal solution (step S640). That is, the lithium production device 1000 may determine one candidate operating condition, which outputs production yield and production results closest to preset objective conditions among the plurality of candidate operating conditions determined by repeating the above steps (step S610 to step S630), as the final operating condition.

FIG. 6 is a diagram illustrating the lithium production method of FIG. 5 in detail according to an embodiment.

In FIG. 6, Tag data may include variables, and variables may include control variables and management variables. The control variables include control elements, and the management variables include management elements. The control elements and management elements may include an input flow rate for each of a base solution and an acid solution, the current and voltage of a rectifier, pH, conductivity, circulation flow rate, and circulation pressure, etc. The Li concentration in Li₂SO₄ of ICP data may be the lithium (Li) concentration in a raw liquid tank containing an input solution (Li₂SO₄) of LS.

The number n of particles may mean variables having n different input conditions. The n input conditions may be each randomly selected within a range from a lower limit to an upper limit of each of the variables.

An objective function includes objective conditions in which the production yield of lithium (Li) is maximized as much as possible and other production indicators must be respectively satisfied. A constraint equation includes constraints that must be at least satisfied in the equipment.

The lithium production method detects optimal operating conditions (optimal particles) satisfying the objective function and the constraint equation.

In the objective function, the lithium production method may satisfy objective conditions of production indicators by using a plurality of (4) partial models (prediction models) and input variables. In the objective function, the lithium production method may calculate the lithium concentration in the base solution (LiOH) in the base tank, the sulfur concentration in the base solution (LiOH) in the base tank, the sulfur concentration in the acid solution (H₂SO₄) in the acid tank, and the lithium concentration in the acid solution (H₂SO₄) in the acid tank through the prediction models.

A first prediction model calculates the lithium concentration in the base solution in the base tank. A second prediction model calculates a sulfur concentration in the base solution in the base tank. A third prediction model calculates the sulfur concentration in the acid solution in the acid tank. A fourth prediction model calculates a lithium concentration in the acid solution in the acid tank.

The first to fourth input conditions input to first to fourth key variables respectively corresponding to each of the first to fourth prediction models using the boosting-based AI model may be generated randomly within the upper/lower limit range, respectively. The first to fourth key variables are respectively obtained through the AI-based preprocessing as described in FIG. 4.

The current of rectifiers No. 1 to No. 6 may be current values of each of rectifiers from No. 1 to No. 6. The LS solution is lithium sulfate (Li₂SO₄), and the LH solution is lithium hydroxide (LiOH).

In the objective condition, the production results may be calculated through a combination of key variables and input variables of the first to fourth prediction models.

The lithium production yield is calculated through the first prediction model and the LH production yield per day. The S concentration (g/L) in the first stage Base is calculated through the first and second prediction models. The Li concentration (g/L) in Acid is calculated through the third and fourth prediction models. The lithium conversion rate may be calculated based on the first prediction model, the lithium (Li) concentration in a raw liquid tank, and the input flow rate of an input raw liquid of the LS. The current efficiency may be calculated based on the first prediction model and the current of rectifiers No. 1 to No. 6.

The lithium production method may check whether constraints are satisfied for the key variables and input variables satisfying the objective conditions. In constraints according to an example, the sulfur concentration in Base should be 0.065 g/L or less, the lithium concentration in Acid should be 0.1 g/L or less (maximum 0.2 g/L or less), the lithium conversion rate should be 85% or more (minimum 65% or more), the current efficiency should be 50% or more (minimum 40% or more), and the range of input conditions for each variable should be within the range from the lower limit to the upper limit.

The lithium production method may be repeatedly performed for a preset number of times (maxiter = m). The lithium production method may generate optimized operating conditions through iteration. That is, the lithium production method may, through m iterations, finally generate the lithium production yield and input conditions (variable values) of the i-th particle as the optimal operating conditions, which output production results closer to objective conditions than production results of the global optimal particles.

FIG. 7 to FIG. 10 are graphs illustrating results of calculating production yields according to key variables according to an embodiment of the present invention. FIG. 7 to FIG. 10 respectively show changes in the concentration of lithium or sulfur during the operating period.

FIG. 7 is a graph illustrating a lithium concentration prediction result based on first key variables of a lithium concentration prediction model in the base solution in the base tank.

In FIG. 7, the actual lithium concentration change (Real) and the predicted lithium concentration change (Pred) show a similar appearance. The Mean Absolute Percentage Error MAPE is 2.024, and the prediction accuracy is about 98%, which greater than 90%. Therefore, it is verified that the calculated first key variables are composed of the minimum number of variables having the accuracy higher than the standard (90% or more).

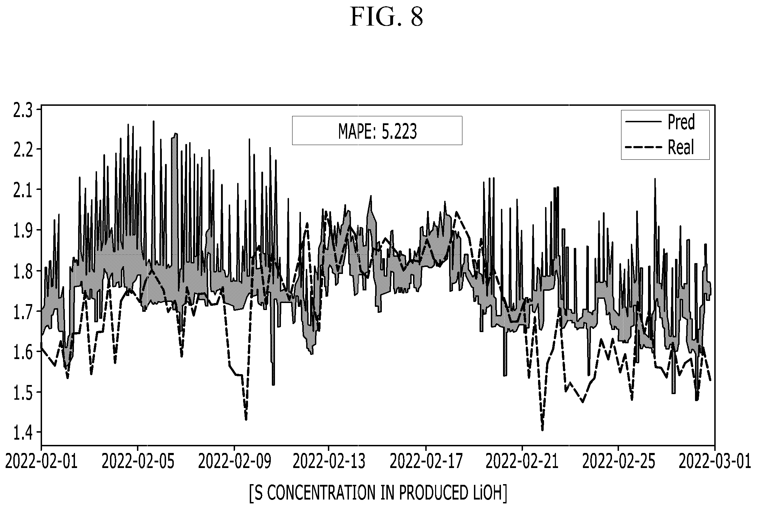

FIG. 8 is a graph illustrating a sulfur concentration prediction result based on second key variables of a sulfur concentration prediction model in the base solution in the base tank.

In FIG. 8, the actual lithium concentration change (Real) and the predicted lithium concentration change (Pred) show a similar appearance. The Mean Absolute Percentage Error MAPE is 5.223, and the prediction accuracy is about 95%, which is greater than 90%. That is, it appears that the calculated second key variables are composed of the minimum number of variables having the accuracy higher than the standard.

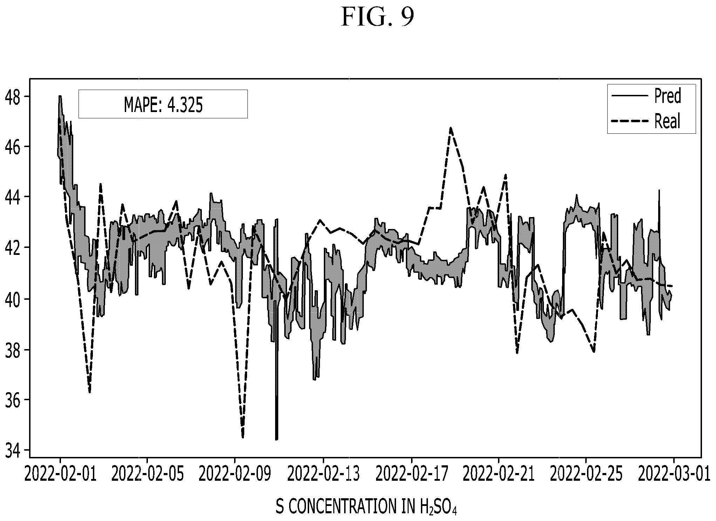

FIG. 9 is a graph illustrating a sulfur concentration prediction result based on third key variables of a sulfur concentration prediction model in the acid solution in the acid tank.

In FIG. 9, the actual lithium concentration change (Real) and the predicted lithium concentration change (Pred) show a similar appearance. The Mean Absolute Percentage Error MAPE is 4.325, and the prediction accuracy is about 96%, which is greater than 90%. That is, it is shown that the calculated third key variables are composed of the minimum number of variables having the accuracy higher than the standard.

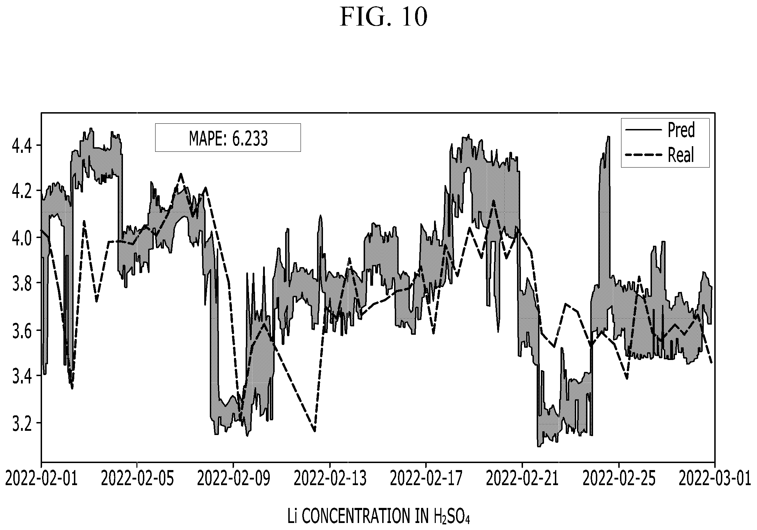

FIG. 10 is a graph illustrating a lithium concentration prediction result based on fourth key variables of a lithium concentration prediction model in the acid solution in the acid tank.

In FIG. 10, similarly, the actual lithium concentration change (Real) and the predicted lithium concentration change (Pred) show a similar appearance. The Mean Absolute Percentage Error MAPE is 4.325, and the prediction accuracy is about 96%, which is greater than 90%. That is, it appears that the calculated fourth key variables are composed of the minimum number of variables having the accuracy higher than the standard.

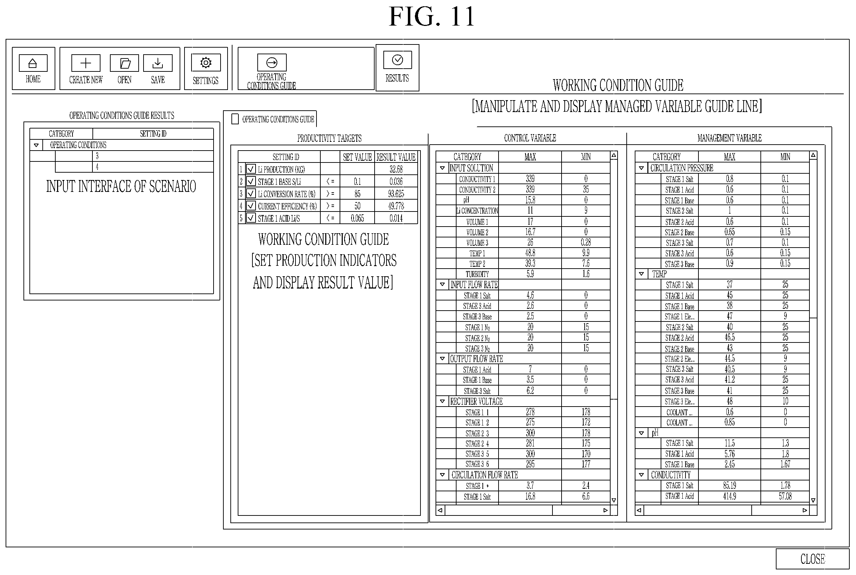

FIG. 11 shows optimal operating conditions generated according to a lithium production method according to an embodiment of the present invention. FIG. 11 shows optimal operating conditions generated according to the embodiment of FIG. 6.

Referring to FIG. 11, a table illustrating productivity goals includes set values (constraints) and result values (production results) of each of the production indicator. Each production indicator represents an optimal production results satisfying the constraints.

The control variables and managed variables show input conditions input to each of the key variables. Each of the key variables are calculated through the preprocessing using the boosting-based AI model and the prediction model. For example, key variables are shown as input solution, input flow rate, rectifier voltage, circulation flow rate, etc. Input conditions are randomly selected for each of the key variables and may be calculated as optimal input conditions by iteration. For example, regarding the key variables of the input solution among the input conditions, conductivity 1 may be selected as the optimal value within the range having a maximum of 339 and a minimum of 0.

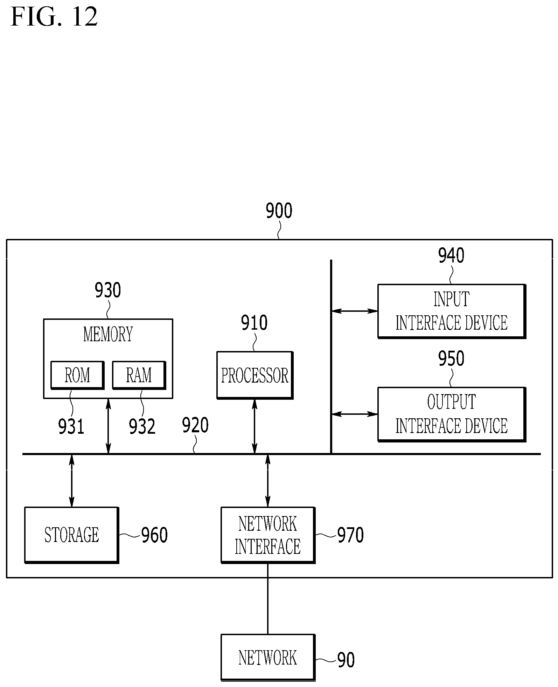

FIG. 12 is a diagram illustrating a computing device according to an embodiment of the present invention.

Referring to FIG. 12, a method and device for producing lithium according to embodiments may be implemented using a computing device 900.

The computing device 900 may include at least one of a processor 910, a memory 930, an input interface device 940, an output interface device 950, and a storage device 960 communicating through a bus 920. The computing device 900 may also include a network interface 970 electrically connected to a network 90. The network interface 970 may transmit or receive signals with other entities through the network 90.

The processor 910 may be implemented in various types such as a Micro Controller Unit MCU, Application Processor AP, Central Processing Unit CPU, Graphic Processing Unit GPU, Neural Processing Unit NPU, etc., and may be any semiconductor device that executes instructions stored in the memory 930 or the storage device 960. The processor 910 may be configured to implement the functions and methods described above with reference to FIGS. 1 to 11.

The memory 930 and the storage device 960 may include various types of volatile or nonvolatile storage media. For example, the memory may include a read-only memory ROM 931 and a random access memory RAM 932. In this embodiment, the memory 930 may be located inside or outside the processor 910, and the memory 930 may be connected to the processor 910 through various already known means.

In some embodiments, at least some components or functions of the method and device for producing lithium according to the embodiments may be implemented as a program or software executed in the computing device 900, and the program or software may be stored in a computer-readable medium.

In some embodiments, at least some components or functions of the method and device for producing lithium according to the embodiments may be implemented using hardware or a circuit of the computing device 900, or may be implemented as a separate hardware or circuit that may be electrically connected to the computing device 900.

Although the embodiments of the present invention have been described in detail above, the scope of rights of the present invention is not limited thereto, and various modifications and improvements by those skilled in the art using the basic concept of the present invention defined in the following claims also belong to the scope of rights of the present invention.

### [Description of Symbols]

1000: Lithium production device
100: Key variable calculation module
200: Operating condition generation module
300: Operating condition optimization module
110: Cleaning unit
120: First preprocessing unit
130: Second preprocessing unit
140: Prediction verifying unit

## Claims

1. A lithium production method comprising:
calculating a key variable determining production yield of a production tank in electrodialysis equipment through an artificial intelligence AI model;
setting a range of input conditions for the calculated key variable; and
calculating production yield and production results corresponding to the input condition by inputting the input condition within the range into the AI model and determining a final operating condition from the production yield and the production results when the calculated production yield and production results satisfy a specific condition.

2. The method of claim 1, wherein the determining of the final operating condition comprises:
a first step of generating a randomly selected input condition within the set range;
a second step of calculating production yield and production results corresponding to the input condition by inputting the generated input condition into a boosting-based AI model;
a third step of determining the production yield and the input condition as candidate operating conditions when the production results satisfy preset constraints; and
a step of determining one candidate operating condition, which outputs production yield and production results closest to preset objective conditions among a plurality of candidate operating conditions determined by repeating the first step to the third step, as the final operating condition.

3. The method of claim 2, wherein the calculating of the key variable comprises:
a cleaning step of obtaining a plurality of first variables through data cleaning for a plurality of initial variables used in the electrodialysis equipment;
a first preprocessing step of calculating variable importance for each of the first variables by inputting the first variables into the boosting-based AI model and obtaining a plurality of second variables through preprocessing based on the variable importance; and
a second preprocessing step of obtaining a plurality of key variables that satisfies a prediction accuracy greater than a first threshold with a minimum number by inputting the second variables into the boosting-based AI model.

4. The method of claim 3, wherein permutation importance is used for the variable importance; and
the first preprocessing step comprises removing first variables among the first variables whose permutation importance is less than a preset second threshold.

5. The method of claim 3, wherein the second preprocessing step comprises calculating the prediction accuracy through Mean Absolute Percentage Error MAPE.

6. The method of claim 2, wherein the setting of the range of the input conditions comprises determining the range of the input conditions based on an upper limit and a lower limit of input conditions within a total operating period using the electrodialysis equipment.

7. The method of claim 2, wherein the production tank includes a base tank and an acid tank, and
the production yield includes production yield of lithium (Li) and production yield of sulfur (S) in the base tank, and production yield of sulfur and production yield of lithium in the acid tank.

8. The method of claim 7, wherein the key variables include a first key variable determining the production yield of lithium (Li) in the base tank, a second key variable determining the production yield of sulfur (S) in the base tank, a third key variable determining the production yield of sulfur in the acid tank, and a fourth key variable determining the production yield of lithium in the acid tank.

9. The method of claim 8, wherein the production results includes a plurality of production indicators; and
the plurality of production indicators include a sulfur (S) concentration in the base tank, a lithium concentration in the acid tank, current efficiency, and a lithium conversion rate.

10. The method of claim 9, wherein the second step comprises:
calculating production yields for each of the first to fourth key variables by respectively inputting first to fourth input conditions randomly selected in correspondence with each of the first to fourth key variables; and
calculating the production results by combining the calculated production yields for each.

11. A lithium production device comprising:
a key variable calculation module for calculating a key variable determining production yield of a production tank in electrodialysis equipment through an artificial intelligence AI model;
an operating condition generation module for setting a range of input conditions for the calculated key variable and calculating production yield and production results corresponding to the input condition as operating conditions by inputting an input condition selected within the range into the AI model; and
an operating condition optimization module for determining the calculated operating condition as a final operating condition when the calculated operating condition satisfies a specific condition.

12. The device of claim 11, wherein the operating condition generation module determines the production yield and the input condition as a candidate operating condition when the production results satisfies preset constraints; and
the operating condition optimization module determines one candidate operating condition, which outputs production yield and production results closest to preset objective conditions among a plurality of candidate operating conditions generated through the operating condition generation module, as the final operating condition.

13. The device of claim 12, wherein the key variable calculation module comprises:
a cleaning unit for obtaining a plurality of first variables through data cleaning for a plurality of initial variables used in the electrodialysis equipment producing lithium;
a first preprocessing unit for calculating variable importance for each of the first variables by inputting the first variables into a boosting-based AI model and for obtaining a plurality of second variables through preprocessing based on the variable importance; and
a second preprocessing unit for obtaining a plurality of key variables satisfying a prediction accuracy greater than a first threshold with a minimum number by inputting the second variables into the boosting-based AI model.

14. The device of claim 13, wherein permutation importance is used for the variable importance; and
the first preprocessing unit removes first variables among the first variables of which the permutation importance is less than a preset second threshold.

15. The device of claim 13, wherein the second preprocessing unit calculates the prediction accuracy through Mean Absolute Percentage Error MAPE.

16. The device of claim 12, wherein the operating condition generation module determines the range of the input conditions based on an upper limit and a lower limit of the input conditions within a total operating period using the electrodialysis equipment.

17. The device of claim 12, wherein the production tank includes a base tank and an acid tank, and
the production yield includes production yield of lithium (Li), production yield of sulfur (S) in the base tank, and production yield of sulfur and production yield of lithium in the acid tank.

18. The device of claim 17, wherein the key variable includes a first key variable determining the production yield of lithium (Li) in the base tank, a second key variable determining the production yield of sulfur (S) in the base tank, a third key variable determining the production yield of sulfur in the acid tank, and a fourth key variable determining the production yield of lithium in the acid tank.

19. The device of claim 18, wherein the production results include a plurality of production indicators; and
the plurality of production indicators include a sulfur (S) concentration in the base tank, a lithium concentration in the acid tank, current efficiency, and a lithium conversion rate.

20. The device of claim 19, wherein the operating condition generation module calculates production yield for each of the first to fourth key variables by respectively inputting first to fourth input conditions randomly selected in correspondence with each of the first to fourth key variables; and calculates the production results by combining the calculated production yields for each of the first to fourth key variables.
